# EUROPÄISCHE PATENTSCHRIFT

(11) **EP 3 106 638 B1**
(45) Veröffentlichungstag und Bekanntmachung des Hinweises auf die Patenterteilung: **18.08.2021**
(21) Anmeldenummer: 16174518.7
(22) Anmeldetag: 15.06.2016
(51) Int. Cl.: F01N 3/20, F02D 19/06, F02D 41/02

(54) **VERFAHREN ZUM BETREIBEN EINER BRENNKRAFTMASCHINE UND STEUERUNGSEINRICHTUNG ZUR DURCHFÜHRUNG DES VERFAHRENS**
METHOD FOR OPERATING A COMBUSTION ENGINE AND DEVICE FOR EXECUTING THE METHOD
PROCEDE DE FONCTIONNEMENT D'UN MOTEUR A COMBUSTION INTERNE ET DISPOSITIF DE COMMANDE DESTINE A L'EXECUTION DU PROCEDE

(30) Priorität: 17.06.2015 DE 102015007646
(43) Veröffentlichungstag der Anmeldung: 21.12.2016
(73) Patentinhaber: MAN Energy Solutions SE, 86153 Augsburg (DE)
(72) Erfinder: Bugsch, Mirko, 86152 Augsburg (DE); Döring, Andreas, 82008 Unterhaching (DE)

(56) Entgegenhaltungen:
- EP-A1- 0 696 676
- EP-A1- 2 332 826
- WO-A1-2014/148256
- DE-A1- 10 148 661
- DE-A1-102007 056 819
- DE-A1-102009 037 254
- US-A1- 2007 163 244
- US-A1- 2013 067 890
- None

## Beschreibung

Die Erfindung betrifft ein Verfahren zum Betreiben einer Brennkraftmaschine nach dem Oberbegriff des Anspruchs 1. Des Weiteren betrifft die Erfindung eine Steuerungseinrichtung zur Durchführung des Verfahrens.

Aus der Praxis bekannte Brennkraftmaschinen, wie zum Beispiel Schiffsdieselbrennkraftmaschinen, verfügen über einen Verbrennungsmotor, in welchem ein Kraftstoff verbrannt wird, sowie über ein dem Verbrennungsmotor nachgeschaltetes Abgasnachbehandlungssystem zur Reinigung des bei der Verbrennung des Kraftstoffs im Verbrennungsmotor entstehenden Abgases. Schiffsdieselbrennkraftmaschinen werden dabei vorzugsweise mit Schweröl betrieben.

Aus der Praxis ist es bekannt, in einem Abgasnachbehandlungssystem einer Brennkraftmaschine das Abgas einer Entstickung sowie vorzugsweise einer Entschwefelung zu unterziehen. Zur Entstickung des Abgases kommen nach dem Stand der Technik sogenannte SCR-Katalysatoren zum Einsatz, die als Reduktionsmittel insbesondere Ammoniak nutzen. Zur Entschwefelung von Abgas sind aus dem Stand der Technik in erster Linie absorptive Verfahren bekannt, die als Absorptionsmittel Brandkalt oder Kalkhydrat oder Kalziumkarbonat nutzen.

Bedingt durch zunehmenden Preisdruck besteht Bedarf daran, Brennkraftmaschinen mit minimalen Betriebsmittelkosten zu betreiben, insbesondere unter Einhaltung von Emissionsgrenzwerten. Dies bereitet derzeit Schwierigkeiten.

Aus der US 8,899,018 B2 ist bereits ein Verfahren zur optimierten Abgasnachbehandlung bekannt, bei diesem die verbrauchsgesteuerte Abstimmung von Kraftstoff und Reduktionsmittel mit den Emissionen einbezogen ist. Die beschriebene Steuerung/Regelung ist allerdings störanfällig.

Aus der WO2014/148256 A1 ist bereits ein Verfahren zum Betreiben einer Brennkraftmaschine (1) bekannt, bei dem die Brennkraftmaschine einen Verbrennungsmotor zur Verbrennung von Kraftstoff und ein dem Verbrennungsmotor nachgeschaltetes Abgasnachbehandlungssystem zur Reinigung von bei der Verbrennung des Kraftstoffs entstehendem Abgas unter Verwendung eines Reduktionsmittels und/oder eines Absorptionsmittels aufweist, bei dem abhängig von Kosten des in dem Verbrennungsmotor zu verbrennenden Kraftstoffs und abhängig von Kosten des im Abgasnachbehandlungssystem zur Abgasnachbehandlung zu verwendenden Reduktionsmittels und/oder Absorptionsmittels die Brennkraftmaschine in einem Betriebspunkt betrieben wird, in welchem minimale Betriebsmittelkosten an Kraftstoff und Reduktionsmittel und/oder Absorptionsmittel anfallen.

Hiervon ausgehend liegt der vorliegenden Erfindung die Aufgabe zu Grunde, ein neuartiges Verfahren zum Betreiben einer Brennkraftmaschine zu schaffen.

Diese Aufgabe wird durch ein Verfahren zum Betreiben einer Brennkraftmaschine nach Anspruch 1 gelöst.

Die hier vorliegende Erfindung schlägt ein Verfahren vor, mit Hilfe dessen eine Brennkraftmaschine unter Bereitstellung einer angeforderten Leistung automatischen in einem Betriebspunkt betrieben werden kann, in welchem minimale Betriebskosten an im Verbrennungsmotor benötigtem Kraftstoff und an im Abgasnachbehandlungssystem benötigten Reduktionsmittel und/oder Absorptionsmittel anfallen. Abhängig von den verbrennungsmotorseitigen Betriebsmittelkosten und den abgasnachbehandlungssystemseitigen Betriebsmittelkosten ist dann ein kostenoptimierter Betrieb der Brennkraftmaschine möglich.

Es werden unter Bereitstellung der angeforderten Leistung über die dem Verbrennungsmotor zugeführte Kraftstoffmenge Rohemissionen im Abgas des Verbrennungsmotors derart automatisch eingestellt, dass in Folge der dem Verbrennungsmotor zugeführten Kraftstoffmenge und in Folge der zur Abgasnachbehandlung im Abgasnachbehandlungssystem benötigten Reduktionsmittelmenge und/oder Absorptionsmittelmenge vorzugsweise unter Einhaltung von Emissionsgrenzwerten minimale Betriebsmittelkosten an Kraftstoff und Reduktionsmittel anfallen.

Nach einer vorteilhaften Weiterbildung werden Kosten des Kraftstoffs und Kosten des Reduktionsmittels und/oder Absorptionsmittels automatisch aktualisiert. Vorzugsweise werden auch die Emissionsgrenzwerte abhängig vom Betriebsort der Brennkraftmaschine und/oder abhängig der Betriebszeit der Brennkraftmaschine automatisch aktualisiert. Durch die automatische Aktualisierung der aktuell gültigen Betriebsmittelkosten für den Verbrennungsmotor, der aktuell gültigen Betriebsmittelkosten für das Abgasnachbehandlungssystem und der aktuell gültigen Emissionsgrenzwerte kann die Brennkraftmaschine stets in einem kostenoptimalen Betriebspunkt betrieben werden.

Nach einer vorteilhaften Weiterbildung wird der Betriebspunkt automatisch derart bestimmt, dass die Brennkraftmaschine unter Einhaltung von Bauteilbelastungsgrenzwerten betrieben wird. Hiermit kann vermieden werden, dass Bauteile der Brennkraftmaschine unzulässig hoch belastet werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert.

Dabei zeigt:
- Fig. 1:: ein Blockschaltbild einer einen Verbrennungsmotor und ein Abgasnachbehandlungssystem umfassenden Brennkraftmaschine; und
- Fig. 2:: ein Diagramm zur Verdeutlichung der Abhängigkeit zwischen Stickoxid- Rohemissionen im Abgas und dem Verbrennungsmotor zugeführter Kraftstoffmenge.

Die Erfindung betrifft ein Verfahren zum Betreiben einer Brennkraftmaschine und eine Steuerungseinrichtung zur Durchführung des Verfahrens.

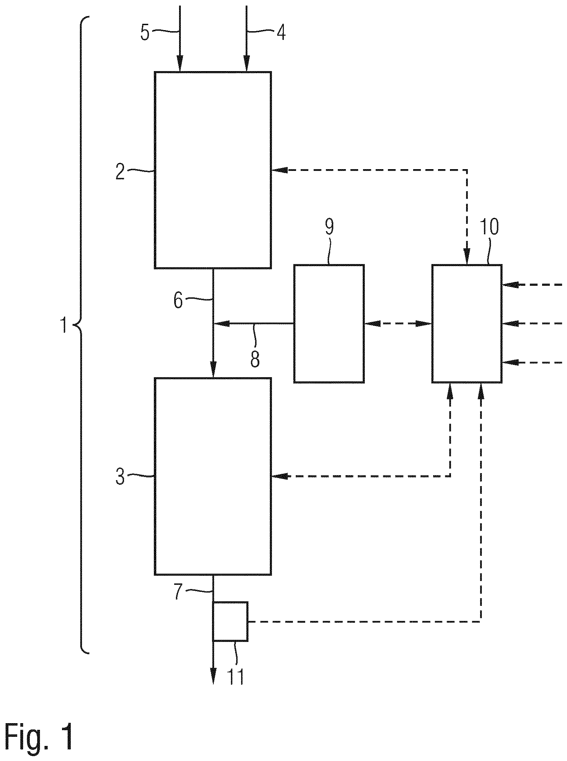

Fig. 1 zeigt stark schematisiert ein Blockschaltbild einer Brennkraftmaschine, die einen Verbrennungsmotor 2 und ein den Verbrennungsmotor 2 nachgeschaltetes Abgasnachbehandlungssystem 3 umfasst. Dem Verbrennungsmotor 2 wird Kraftstoff 4 und Ladeluft 5 zur Verbrennung des Kraftstoffs 4 zugeführt, wobei bei der Verbrennung des Kraftstoffs 4 im Verbrennungsmotor 2 entstehendes Abgas 6 zur Abgasnachbehandlung dem Abgasnachbehandlungssystem 3 zugeführt wird, welches das Abgasnachbehandlungssystem 3 als gereinigtes Abgas 7 verlässt.

Im gezeigten Ausführungsbeispiel sei exemplarisch davon ausgegangen, dass es sich beim Abgasnachbehandlungssystem 3 um ein Abgasnachbehandlungssystem handelt, welches zumindest einen SCR-Katalysator umfasst, in welchem zur Abgasreinigung als Reduktionsmittel 8 Ammoniak benötigt wird. Im in Fig. 1 gezeigten Ausführungsbeispiel wird dieses Reduktionsmittel 8 über eine Dosiereinrichtung 9 dem Abgas 6, welches den Brennkraftmaschine 2 verlässt, zudosiert, sodass das Reduktionsmittel 8 in dem Abgasnachbehandlungssystem 3 zur Abgasreinigung verwendet werden kann. In einem SCR-Katalysator dient das vorzugsweise als Ammoniak ausgebildete Reduktionsmittel 8 der Entstickung des Abgases 6, in dem unter Verwendung von Ammoniak als Reduktionsmittel Stickoxide NOx wie NO und NO₂ in Stickstoff N₂ und Wasserdampf H₂Oumgesetzt werden.

Einem solchen SCR-Katalysator kann ein NO-Oxidationskatalysator vorgeschaltet sein, um NO in NO₂ zu oxidieren, und um so die Reaktionsgeschwindigkeit im SCR-Katalysator zu erhöhen.

Zum Betrieb der in Fig. 1 gezeigten Brennkraftmaschine 1 fallen demnach verbrennungsmotorseitige Betriebsmittelkosten, nämlich die Kosten des Kraftstoffs 4, und abgasnachbehandlungssystemseitige Betriebsmittelkosten, nämlich die Kosten des Reduktionsmittels 8, an, die zusammen die Betriebsmittelkosten der Brennkraftmaschine 1 maßgeblich definieren.

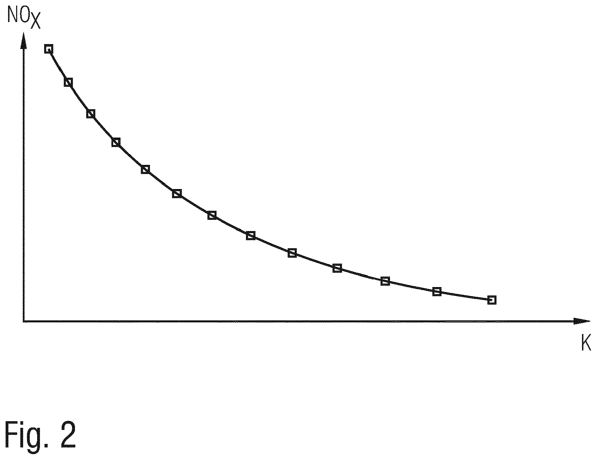

Um die Brennkraftmaschine 1 unter Bereitstellung einer angeforderten Leistung betriebsmittelkostenoptimal zu betreiben, wird abhängig von den Kosten des im Verbrennungsmotor 2 zu verbrennenden Kraftstoffs 4 und abhängig von den Kosten des im Abgasnachbehandlungssystem 3 zur Abgasreinigung verwendeten Reduktionsmittels 8 die Brennkraftmaschine automatisch in einem Betriebspunkt betrieben, in welchem zur Bereitstellung der angeforderten Leistung minimale Betriebsmittelkosten an Kraftstoff 4 und Reduktionsmittel 8 anfallen. Hierzu ist vorzugsweise vorgesehen, über die dem Verbrennungsmotor 2 zugeführte Menge an Kraftstoff 4, die z.B. bei Common-Rail-Einspritzsystemen für einen großen Teil des Leistungsbereichs der Brennkraftmaschine über eine Verschiebung des Einspritzzeitpunkts beeinflusst werden kann, Rohemissionen im Abgas 6 des Verbrennungsmotors 2 derart automatisch einzustellen, dass infolge der dem Verbrennungsmotor 2 zugeführten Kraftstoffmenge und infolge der zur Abgasnachbehandlung im Abgasnachbehandlungssystem 3 benötigten Menge an Reduktionsmittel 8 minimale Betriebskosten an Kraftstoff 4 und Reduktionsmittel 8 anfallen. So steigen z.B. durch Verschiebung eines Einspritzzeitpunkts nach früh und/oder Erhöhen des Einspritzdrucks die Stickoxidemissionen. Weitere Motorparameter, die die NOx- Rohemission beeinflussen, sind das Kraftstoff-/Luftverhältnis und die Anzahl der Kraftstoffeinspritzungen. Der Einfluss des Einspritzzeitpunkts K auf die NOx-Rohemission wird in Fig. 2 dargestellt: Frühe Spritzbeginne (kleine K- Werte) führen zu einem Anstieg der NOx- Rohemissionen. Bei steigenden Stickoxidemissionen wird mehr Reduktionsmittel 8 benötigt, um unter Einhaltung von Emissionsgrenzwerten für die Stickoxidemissionen das Abgas 6 im Abgasnachbehandlungssystem 3 zu reinigen. Abhängig von der dem Verbrennungsmotor 2 zugeführten Kraftstoffmenge und den diesbezüglichen Kraftstoffkosten und abhängig von der dem Abgasnachbehandlungssystem 3 zugeführten Reduktionsmittelmenge und den Reduktionsmittelkosten, die zur Reinigung des den Verbrennungsmotor 2 verlassenden Abgases 6 benötigt werden, wird ein Betriebspunkt für die Brennkraftmaschine 1 automatisch bestimmt und die Brennkraftmaschine 1 automatisch in diesem Betriebspunkt betrieben, sodass die Brennkraftmaschine 1 unter Einhaltung entsprechender Emissionsgrenzwerte unter Bereitstellung der angeforderten Leistung im Hinblick auf die Betriebsmittelkosten an Kraftstoff und Reduktionsmittel optimal betrieben werden kann.

Im Sinne der hier vorliegenden Erfindung ist vorgesehen, dass zur Durchführung des erfindungsgemäßen Verfahrens eine Steuerungseinrichtung 10 vorhanden ist, die Mittel zur Durchführung des erfindungsgemäßen Verfahrens umfasst. Bei diesen Mitteln handelt es sich um hardwareseitige Mittel und um softwareseitige Mittel. Bei den hardwareseitigen Mitteln handelt es sich insbesondere um Datenschnittstellen, um mit den an der Durchführung des erfindungsgemäßen Verfahrens beteiligten Baugruppen Daten auszutauschen. Weiterhin handelt es sich bei den hardwareseitigen Mitteln um einen Datenspeicher zur Speicherung von Daten, und einem Prozessor zur Verarbeitung von Daten. Bei den softwareseitigen Mitteln handelt es sich um Programmbausteine, die zur Durchführung des erfindungsgemäßen Verfahrens in der Steuerungseinrichtung 10 implementiert sind.

Erfindungsgemäß ist demnach vorgesehen, dass die Steuerungseinrichtung 10 abhängig von Betriebsmittelkosten für im Verbrennungsmotor 2 zu verbrennenden Kraftstoff 4 und abhängig von Betriebsmittelkosten für im Abgasnachbehandlungssystem 3 zur Abgasnachbehandlung benötigtem Reduktionsmittel 8 einen Betriebspunkt für die Brennkraftmaschine 1 automatisch ermittelt und die Brennkraftmaschine 1 in diesem Betriebspunkt automatisch betreibt, sodass sich unter Bereitstellung der angeforderten Leistung minimale Betriebsmittelkosten an Kraftstoff 4 und Reduktionsmittel 8 ergeben.

Nach einer vorteilhaften Weiterbildung kann vorgesehen sein, die Emissionsgrenzwerte, die beim Betrieb der Brennkraftmaschine 1 einzuhalten sind, automatisch zu aktualisieren. So kann zum Beispiel vorgesehen sein, dass der Steuerungseinrichtung 10 abhängig vom aktuellen Betriebsort und/oder abhängig von der aktuellen Betriebszeit der Brennkraftmaschine 1 automatisch die aktuell einzuhaltenden Emissionsgrenzwerte zur Verfügung gestellt werden, um dann auf Basis der aktuell einzuhaltenden Emissionsgrenzwerte den betriebsmittelkostenoptimalen Betriebspunkt für die Brennkraftmaschine 1 zu bestimmen, sodass letztendlich in Summe minimale Betriebskosten an Kraftstoff 4 und Reduktionsmittel 8 anfallen.

Dabei kann vorgesehen sein, die Einhaltung der Emissionsgrenzwerte automatisch mit Hilfe mindestens eines Sensors 11 zu überwachen, der in Fig. 1 dem Abgasnachbehandlungssystem 3 zugeordnet ist, und der Emissionen des gereinigten Abgases 7 hinsichtlich der Einhaltung von Emissionsgrenzwerten überprüft. Das Signal des Sensors 11 dient dann der Steuerungseinrichtung 10 als Eingangsgröße, sodass dieselbe unter Einhaltung der gültigen Emissionsgrenzwerte den betriebsmittelkostenoptimalen Betriebspunkt für die Brennkraftmaschine 1 bestimmen kann.

Nach einer weiteren vorteilhaften Weiterbildung der Erfindung ist vorgesehen, die Kosten des Kraftstoffs 4 und die Kosten des Reduktionsmittels 8 automatisch zu aktualisieren. Dies kann bei jedem Betankungsvorgang der Brennkraftmaschine 1, also bei jedem Betanken derselben mit Kraftstoff 4 und/oder Reduktionsmittel 8, erfolgen. Verschiebt sich das Verhältnis der Betriebsmittelkosten von Kraftstoff und Reduktionsmittel, so verschiebt sich auch der optimale Betriebspunkt, in welchem die Brennkraftmaschine 1 vorzugsweise unter Einhaltung der aktuellen Emissionsgrenzwerte betrieben wird.

Nach einer weiteren vorteilhaften Weiterbildung der Erfindung kann vorgesehen sein, dass darüber hinaus der Betriebspunkt, in welchem die Brennkraftmaschine 1 betrieben wird, derart bestimmt wird, dass dieselbe unter Einhaltung von Bauteilbelastungsgrenzen betrieben wird. So dürfen weder im Bereich des Verbrennungsmotors 2 noch im Bereich des Abgasnachbehandlungssystems 3 Belastungsgrenzen für entsprechende Baugruppen überschritten werden, um eine Beschädigung dieser Baugruppen zu vermeiden. Der betriebsmittelkostenoptimale Betriebspunkt für die Brennkraftmaschine 1 wird demnach nach dieser Weiterbildung der Erfindung abhängig von den einzuhaltenden Emissionsgrenzwerten und abhängig von den einzuhaltenden Bauteilbelastungsgrenzwerten automatisch ermittelt.

Die Einhaltung von Bauteilbelastungsgrenzwerten kann ebenfalls mit Hilfe eines entsprechenden Sensors überwacht werden, zum Beispiel im Bereich des Verbrennungsmotors 2 mit Hilfe eines Temperatursensors, auf Grundlage dessen Messsignale überwacht werden kann, dass zulässige Bauteiltemperaturen im Verbrennungsmotor 2 nicht überschritten werden. Darüber hinaus kann alternativ oder zusätzlich zur Überwachung mittels der genannten Sensoren die Einhaltung von Bauteilbelastungsgrenzwerten mittels Kennfelder überwacht werden.

Es liegt demnach im Sinne der hier vorliegenden Erfindung, dass abhängig von verbrennungsmotorseitigen Betriebsmittelkosten und abgasnachbehandlungssystemseitigen Betriebsmittelkosten, insbesondere abhängig von Kraftstoffkosten und Reduktionsmittelkosten, automatisch ein Betriebspunkt für eine Brennkraftmaschine 1 ermittelt und die Brennkraftmaschine 1 automatisch in diesem Betriebspunkt betrieben wird, nämlich in einem Betriebspunkt, in welchem unter Bereitstellung einer angeforderten Motorleistung und unter Einhaltung von Emissionsgrenzwerten und/oder unter Einhaltung von Bauteilbelastungsgrenzwerten in Summe minimale Betriebsmittelkosten anfallen. Betriebsmittelkosten und/oder Emissionsgrenzwerte können dabei automatisch aktualisiert werden, insbesondere über eine entsprechende Schnittstelle der Steuerungseinrichtung 10. Dann, wenn eine Schiffbrennkraftmaschine betrieben wird, können zum Beispiel auf Grundlage der aktuellen Position Emissionsgrenzwerte automatisch fortlaufend aktualisiert werden, um abhängig hiervon den betriebsmittelkostenoptimalen Betriebspunkt fortlaufend neu zu bestimmen.

Da im maritimen Bereich unterschiedliche Emissionsklassen relevant sind, wie z.B. IMO Tier II oder Tier III, wird auch das relevante Emissionslimit bei der Optimierung des Betriebspunktes entweder durch manuelle Eingabe oder auf Basis der aktuellen Position, d.h. des Standortes, insbesondere über Satelliten gestützte Systeme berücksichtigt. Bei dem Satelliten gestützten System (z.B. GPS) wird auch berücksichtigt, dass gegebenenfalls ein Vorlauf nötig ist, um die Emissionen sicher zu erreichen. Dieser nötige Vorlauf wird berücksichtigt und die Umschaltung erfolgt entsprechend früher.

Im Gegensatz zum bisherigen Stand der Technik erfolgt die Auswahl des Betriebspunktes kennfeldbasiert und nicht über eine Regelung, die störanfällig ist. Für unterschiedliche Preisverhältnisse und unterschiedliche Kraftstoffe werden unterschiedliche Kennfelder hinterlegt. Durch Eingabe der Preise für Kraftstoff und Reduktionsmittel wird in Kombination mit dem gültigen Emissionslimit das ökonomischste Kennfeld ausgewählt.

Die kostengünstigste erlaubte Konfiguration wird also dahingehend gewählt, dass das relevante Emissionslimit bestimmt wird und auf Basis der Betriebsmittelkosten des Kraftstoffes und des Reduktionsmittels automatisch der kostengünstigste Betriebspunkt ausgewählt wird. Dabei wird auch berücksichtigt, dass gegebenenfalls ein Vorlauf nötig ist, um die Emissionen sicher zu erreichen. Dieser nötige Vorlauf wird berücksichtigt und die Umschaltung erfolgt entsprechend früher.

Durch die Verwendung von Kennfeldern ist, ist es möglich, das tatsächliche, aktuelle Emissionsverhalten der Anlage außerhalb ersichtlich und ablesbar zu machen.. Dazu wird auf Basis der Motor- und Abgasnachbehandlungs-Parameter eine Kennzahl gebildet, der sogenannte Identifier, der z.B. aus der Prüfsumme der Einstellungen oder auf Basis von Messwerten generiert wird, aus dem alle emissionsrelevanten Einstellungen hervorgehen und der die Einhaltung der Emissionslimits und/oder die Verwendung des jeweiligen Kennfelds anzeigt. Werden die Einstellungen an Motor oder Abgasnachbehandlung geändert um einen möglichst kostenoptimalen Betrieb zu gewährleisten, ändert sich auch der Identifier. Da jedem Kennfeld für den Motor und die Abgasnachbehandlung jeweils genau ein Identifier zugeordnet werden kann, kann bei einem kennfeldbasiertem System die Einhaltung der richtigen Emissionsklasse von Außen leicht kontrolliert werden. Unter Bezugnahme auf Fig. 1 wurde die Erfindung exemplarisch für den Fall beschrieben, dass das Abgasnachbehandlungssystem 3 einen SCR-Katalysator umfasst, in welchem zur Entstickung des Abgases 6 des Verbrennungsmotors 2 als Reduktionsmittel 8 Ammoniak benötigt wird. Es sei an dieser Stelle darauf hingewiesen, dass die Erfindung nicht auf diesen bevorzugten Anwendungsfall beschränkt ist. Vielmehr kann die Erfindung auch dann Verwendung finden, wenn als Betriebsmittelkosten des Abgasnachbehandlungssystems 3 Kosten an Absorptionsmittel anfallen, die zum Beispiel zur Entschwefelung des Abgases 6 im Abgasnachbehandlungssystem 3 benötigt werden.

Mit der Erfindung ist es möglich, eine Brennkraftmaschine stets abhängig von entsprechenden verbrennungsmotorseitigen und abgasnachbehandlungssystemseitigen Betriebsmittelkosten unter Einhaltung von Emissionsgrenzwerten und/oder Bauteilbelastungsgrenzwerten automatisch in einem betriebsmittelkostenoptimalen Betriebspunkt zu betreiben.

Erfindungsgemäß kann die Brennkraftmaschine mit unterschiedlichen Brennstoffen betrieben werden und beim Betrieb mit unterschiedlichen Kraftstoffen, wie z.B. Schweröl, raffiniertem Dieselkraftstoff oder Gas, auf unterschiedliche jeweils auf den verwendeten Kraftstoff spezifizierte Kennfelder zurückgegriffen wird.

Erfindungsgemäß werden bei Ausfall der Abgasnachbehandlung die Rohemissionen des Motors und/ oder die Kraftstoffsorte automatisch so ausgewählt, dass die jeweils gültigen Grenzwerte eingehalten werden.

### Bezugszeichenliste

- 1: Brennkraftmaschine
- 2: Verbrennungsmotor
- 3: Abgasnachbehandlungssystem
- 4: Kraftstoff
- 5: Ladeluft
- 6: Abgas
- 7: Abgas
- 8: Reduktionsmittel
- 9: Dosiereinrichtung
- 10: Steuerungseinrichtung
- 11: Sensor

## Patentansprüche

1. Verfahren zum Betreiben einer Brennkraftmaschine (1) einer mit Schweröl betriebenen Schiffsdieselbrennkraftmaschine, wobei die Brennkraftmaschine (1) einen Verbrennungsmotor (2) zur Verbrennung von Kraftstoff und ein dem Verbrennungsmotor (2) nachgeschaltetes Abgasnachbehandlungssystem (3) zur Reinigung von bei der Verbrennung des Kraftstoffs entstehendem Abgas unter Verwendung eines Reduktionsmittels und/oder eines Absorptionsmittels aufweist, wobei abhängig von Kosten des in dem Verbrennungsmotor (2) zu verbrennenden Kraftstoffs und abhängig von Kosten des im Abgasnachbehandlungssystem (3) zur Abgasnachbehandlung zu verwendenden Reduktionsmittels und/oder Absorptionsmittels die Brennkraftmaschine (1) in einem Betriebspunkt betrieben wird, in welchem minimale Betriebsmittelkosten an Kraftstoff und Reduktionsmittel und/oder Absorptionsmittel anfallen, wobei zur Veränderung der Rohemissionen der Brennkraftmaschine und des Umsetzungsverhaltens der Abgasnachbehandlungsvorrichtung und damit auf die benötigten Reduktionsmittelmengen und/oder Absorptionsmittelmengen auf Kennfelder zurückgegriffen wird, wobei durch Verändern wenigstens eines der folgenden Motorparameter:
- -Kraftstoff-/Luftverhältnis
- Kraftstoffeinspritzdruck
- Kraftstoffeinspritzzeitpunkt
- Anzahl der Einspritzung
die Rohemissionen im Abgas des Verbrennungsmotors (2) derart automatisch eingestellt werden, dass in Folge der zur Abgasnachbehandlung im Abgasnachbehandlungssystem (3) benötigten Reduktionsmittelmenge und/oder Absorptionsmittelmenge minimale Betriebsmittelkosten an Kraftstoff und Reduktionsmittel und/oder Absorptionsmittel anfallen, **dadurch gekennzeichnet, dass** bei Ausfall der Abgasnachbehandlung die Rohemissionen des Motors und/oder die Kraftstoffsorte automatisch so ausgewählt werden, dass die jeweils gültigen Grenzwerte eingehalten werden und dass der Motor mit unterschiedlichen Brennstoffen betrieben werden kann und beim Betrieb mit unterschiedlichen Kraftstoffen auf jeweils unterschiedliche Kennfelder zurückgegriffen wird, dass Kosten des Kraftstoffs und Kosten des Reduktionsmittels und/oder Absorptionsmittels aktualisiert werden.

2. Verfahren nach Anspruch 1, **dadurch gekennzeichnet, dass** der Betriebspunkt automatisch derart bestimmt wird, dass die Brennkraftmaschine (1) unter Einhaltung von Emissionsgrenzwerten betrieben wird.

3. Verfahren nach Anspruch 1, **dadurch gekennzeichnet, dass** die Emissionsgrenzwerte abhängig vom Betriebsort und/oder der Betriebszeit der Brennkraftmaschine (1) aktualisiert werden.

4. Verfahren nach einem der Ansprüche 1 bis 3, **dadurch gekennzeichnet, dass** der Betriebspunkt derart bestimmt wird, dass die Brennkraftmaschine (1) unter Einhaltung von Bauteilbelastungsgrenzwerten betrieben wird.

## Claims

1. A method for operating an internal combustion engine (1) of a diesel internal combustion engine of a ship operated with heavy fuel oil, wherein the internal combustion engine (1) comprises a combustion engine (2) for the combustion of fuel and an exhaust gas aftertreatment system (3) connected downstream of the combustion engine (2) for cleaning exhaust gas created during the combustion of the fuel using a reducing agent and/or an absorbent, wherein dependent on costs of the fuel to be combusted in the combustion engine (2) and dependent on costs of the reducing agent and/or absorbent to be used in the exhaust gas aftertreatment system (3) for the exhaust gas aftertreatment the internal combustion engine (1) is operated in an operating point, in which minimal operating resources costs of fuel and reducing agent and/or absorbent are incurred, wherein for changing the raw emissions of the internal combustion engine and the implementation behaviour of the exhaust gas aftertreatment device and thus the required reducing agent quantities and/or absorbent quantities characteristic diagrams are utilised, wherein by changing at least one of the following engine parameters:
- fuel/air ratio
- fuel injection pressure,
- fuel injection timing,
- injection quantity
the raw emissions in the exhaust gas of the combustion engine (2) are automatically adjusted in such a manner that as a consequence of the reducing agent quantity and/or absorbent quantity needed for the exhaust gas aftertreatment in the exhaust gas aftertreatment system (3) minimum operating resources costs of fuel and reducing agent and/or absorbent are incurred, **characterized in that** upon a failure of the exhaust gas aftertreatment the raw emission of the engine and/or the fuel type are automatically selected so that the respectively applicable limit values are adhered to and that the engine can be operated with different fuels and, during the operation with different fuels, different characteristic diagrams are utilised in each case, **in that** costs of the fuel and costs of the reducing agent and/or absorbent are updated.

2. The method according to Claim 1, **characterized in that** the operating point is automatically determined in such a manner that the internal combustion engine (1) is operated while maintaining emission limit values.

3. The method according to Claim 1, **characterized in that** the emission limit values are updated dependent on the operating location and/or the operating time of the internal combustion engine (1).

4. The method according to any one of the Claims 1 to 3, **characterized in that** the operating point is determined in such a manner that the internal combustion engine (1) is operated while maintaining component load limit values.

## Revendications

1. Procédé pour faire fonctionner un moteur à combustion interne (1) d'un moteur diesel de navire fonctionnant au fioul lourd, dans lequel le moteur à combustion interne (1) présente un moteur à combustion interne (2) pour la combustion du carburant et un système de post-traitement des gaz d'échappement (3) raccordé en aval du moteur à combustion interne (2) pour purifier les gaz d'échappement résultant de la combustion du carburant à l'aide d'un agent réducteur et/ou d'un agent absorbant, dans lequel en fonction du coût du carburant à brûler dans le moteur à combustion interne (2) et en fonction du coût de l'agent réducteur et/ou de l'agent absorbant à utiliser dans le système de post-traitement des gaz d'échappement (3) pour le post-traitement des gaz d'échappement, le moteur à combustion interne (1) fonctionne à un point de fonctionnement auquel des coûts d'exploitation minimaux pour le carburant et l'agent réducteur et/ou l'agent absorbant sont engendrés, dans lequel pour modifier les émissions brutes du moteur à combustion interne et le comportement de mise en œuvre du dispositif de post-traitement des gaz d'échappement et donc les quantités d'agent réducteur et/ou les quantités d'agent absorbant requises, on utilise des diagrammes caractéristiques, dans lequel en modifiant au moins un des paramètres moteur suivants:
- rapport air/carburant
- pression d'injection de carburant
- point temporel d'injection de carburant
- nombre d'injections
les émissions brutes dans les gaz d'échappement du moteur à combustion interne (2) sont automatiquement réglées de telle sorte qu'en raison de la quantité d'agent réducteur et/ou la quantité d'agent absorbant nécessaire pour le post-traitement des gaz d'échappement dans le système de post-traitement des gaz d'échappement (3), des coûts d'exploitation minimes du carburant et de l'agent réducteur et/ou de l'agent absorbant sont engendrés, en ce que en cas d'échec du post-traitement des gaz d'échappement, les émissions brutes du moteur et/ou le type de carburant sont automatiquement sélectionnés de sorte que les valeurs limites respectives soient respectées et en ce que le moteur peut fonctionner avec différents carburants et que lors du fonctionnement avec différents carburants on utilise différents digrammes caractéristiques, en ce que le coût du carburant et le coût de l'agent réducteur et/ou de l'agent absorbant est mis à jour.

2. Procédé selon la revendication 1, **caractérisé en ce que** le point de fonctionnement est déterminé automatiquement de telle sorte que le moteur à combustion interne (1) fonctionne dans le respect des valeurs limites d'émission.

3. Procédé selon la revendication 1, **caractérisé en ce que** les valeurs limites d'émission sont mises à jour en fonction du lieu de fonctionnement et/ou de la durée de fonctionnement du moteur à combustion interne (1).

4. Procédé selon une quelconque des revendications 1 à 3, **caractérisé en ce que** le point de fonctionnement est déterminé de telle sorte que le moteur à combustion interne (1) fonctionne dans le respect des valeurs limites de charge des composants.
